# EUROPEAN PATENT SPECIFICATION

(11) **EP 2 732 573 B1**
(45) Date of publication and mention of the grant of the patent: **05.05.2021**
(21) Application number: 12707308.8
(22) Date of filing: 06.03.2012
(51) Int. Cl.: H04L 1/18

(54) **METHOD FOR COMPRESSING SOFT VALUES**
VERFAHREN ZUM KOMPRIMIEREN WEICHER WERTE
PROCÉDÉ DE COMPRESSION DE VALEURS LOGICIELLES

(43) Date of publication of application: 21.05.2014
(73) Proprietor: Huawei Technologies Co., Ltd., Longgang District Shenzhen, Guangdong 518129 (CN)
(72) Inventor: SINGVALL, Jakob, S-16440 Kista (SE)
(74) Representative: Pfenning, Meinig & Partner mbB
(86) International application number: PCT/EP2012/053811
(87) International publication number: WO 2013/131558

(56) References cited:
- EP-A2- 2 086 152
- WO-A1-2012/012248
- GB-A- 2 492 126
- US-A1- 2008 092 008
- US-A1- 2010 005 356

## Description

### Technical Field

The present invention relates to a method in a receiver for compressing soft values. Furthermore, the invention also relates to a receiver device, a computer program, and a computer program product thereof.

### Background of the Invention

HARQ (Hybrid-ARQ) with soft combining techniques are widely used in many contemporary digital communication systems, such as EGPRS, UMTS, LTE, CDMA 2000.

HARQ with soft combining significantly improves spectral efficiency and user data throughput. The general idea with HARQ with soft combining is to use the energy in all transmissions of the same transport block. Hence, incorrectly received transport blocks are stored in a so called HARQ buffer, and when retransmitted block is received, the two blocks are soft combined. The soft combining can be either Chase Combining or Incremental Redundancy, or a combination of both.

With Chase Combining, the same coded bits are retransmitted and combined. Every retransmission adds extra energy, i.e. increased Eb/N0. With Incremental redundancy, every new retransmission consists of new parity bits. The combination of the two transmissions results in a transport block with lower code rate than the individual transport blocks.

The probability for successful decoding of the combined block is higher than the probability for successful decoding using HARQ without soft combining, i.e. individual decoding of the two receptions.

In these types of communication systems, one of the largest allocations of memory in a receiver (such as a base station or mobile station) is the HARQ buffer. In mentioned HARQ buffer, transport blocks with non-successful decoding are stored until combined with retransmissions as described above. With higher data rates, e.g. with increasing sizes of transport blocks achieved with higher order modulation, or more HARQ processes achieved by multiple carriers or MIMO or combination, the size of the HARQ buffer increases.

In order to reduce the size of the costly HARQ memory in the receivers compression is applied. Truncation of soft values, i.e. removal of least significant bits, reduction of dynamic range, or statistical compression methods, or any other suitable compression algorithm can be applied.

The use of compression results in a trade-off between size of memory and throughput (user data rate) since compression reduces the quality of soft values, i.e. loss of information meaning that the higher compression rate, the lower quality and lower throughput. Depending on the compression algorithm, the loss of information can be e.g. reduced resolution or reduced dynamic range.

In prior art, fixed compression of soft values is employed, i.e. one compression algorithm with fixed compression rate is used. For example, in situations with few retransmissions, the utilization of the HARQ memory is low but compression is applied. As a result, the quality of the soft values of the stored transport blocks is reduced, resulting in lower user data rate.

US 2010/0005356 discloses a HARQ retransmission method in wireless communication system. The Likelihood ratio (LLR) is stored in a HARQ memory. The receiver determines whether a memory space is large enough to store the evaluated maximum data size. The maximum data size may be multiplied by a length (i.e., the number of bits) of an LLR value to determine a necessary memory space. If an allocated memory space is insufficient, it is determined that M-bit compression is necessary. Thus, the receiver compresses the HARQ data consisting of the N-bit LLR values into M-bit LLR values, and stores the compressed M-bit LLR values in the memory.

EP2086152 discloses a HARQ a retransmission process in wireless communication system. A received signal (S) of a systematic bit sequence S to be subjected to a retransmission process P1 is added to the memory area B1 of the buffer. Assume that a received signal to be subjected to another retransmission process Px occurs to the buffer that does not have a required number of free areas. Then, the retransmission process control section selects as a target of DISCARD one of the retransmission processes, and performs partial DISCARD by discarding the received signal (Parity 1) and/or received signal (Parity2) corresponding to the selected retransmission process from the buffer. Upon selection of the retransmission process PI as a target of partial DISCARD, the retransmission process control section performs partial DISCARD by discarding the received signal (Parity1) stored in the memory area B2 of the buffer and/or the received signal (Parity2) stored in the memory area B3.

US 2008/0092008 discloses buffer compression in ARQ process. A ARQ subsystem receives a data string from a receiver. The received data string from the receiver as well as the output of multiplexer are combined. The combined data string is clamped and then passed to a decoder, as well as to compander. A compander is a compression circuit that compresses a data string according to a predetermined set of rules. The compander compresses the data string from k bits to a length of k-1 bits. The compressed block is then stored in memory. WO 2012/012248 discloses a method for quantizing decision metrics (e.g., log likelihood ratios (LLRs)) for reduction of memory requirements in wireless communication. The method includes selecting a quantization algorithm. The quantization algorithm may be selected as a function of a characteristic of a decision metric representative of a transport block received over a communication channel, a characteristic of the transport block, or a condition of the communication channel. The method further includes quantizing the decision metric using the selected quantization algorithm to generate at least one quantized decision metric representative of the transport block. The method further includes storing the quantized decision metric and an indicia of the selected quantization algorithm to enable recovery of the decision metric representative of the transport block prior to decoding.

### Summary of the Invention

An object of the present invention is to provide a solution which mitigates or solves the drawbacks and problems of prior art solutions.

Another object of the invention is to provide a solution which increase throughput compared to prior art solutions.

An embodiment of the present invention is a method as provided in claim 1.

Another embodiment of the invention is a receiving apparatus as provided in claim 16.

Another embodiment of the invention is a computer program product as provided in claim 14.

The present invention provides a solution which improves throughput by using adaptive compression with variable compression rate. Adaptive HARQ compression improves link performance compared with prior art with fixed compression of soft values.

The link performance of the invention equals prior art without compression of soft values or better than prior art in all use cases except for the extreme case when all soft values are stored in HARQ buffer, i.e. 100% utilization of HARQ buffer. The size of the HARQ buffer equals the prior art with compression in case the link performance for the extreme case shall be retained. However, the adaptive HARQ compression adds the flexibility to a trade off between memory size and extreme use case link performance without violating link performance in normal use cases.

Further applications and advantages of the invention will be apparent from the following detailed description.

### Brief Description of the Drawings

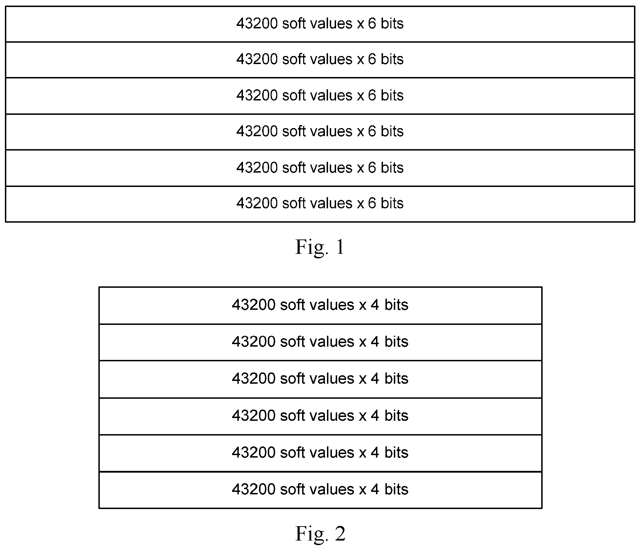

The appended drawings are intended to clarify and explain the present invention in which fig. 1 - 11 illustrate cases 1- 11, respectively.

### Detailed Description of the Invention

To achieve the aforementioned and other objects, the present invention relates to a method in a receiver, and to a receiver device for compressing soft values. The receiver comprises at least one HARQ buffer which is used for storing bit representations of soft values. The bit representations are used for HARQ retransmission combining in a wireless communication system.

The present method comprise the step of adaptively compressing soft values by using a variable compression rate *c;* and the device is correspondingly arranged to compress soft values by using the variable compression rate *c.* Thereby, the utilization of the HARQ buffer can be performed in a more effective manner improving receiver performance without additional cost of memory.

According to the invention, in situations with few retransmissions the stored transport blocks are not compressed at all thereby improving receiver performance and user throughput. Whilst in situations with many retransmissions the stored transport blocks are compressed in order to reduce memory requirements which are defined by the maximum transport block size, number of HARQ processes and number of bits per compressed soft value.

According to the invention the variable compression rate *c* is dependent on the utilization of the HARQ buffer. Preferably, the variable compression rate c increases if the utilization increases and/or the variable compression rate *c* decreases if the utilization decreases. Factors which have an effect on the utilization rate *u* are e.g. number of HARQ retransmissions, transport block size, and number of HARQ processes.

The utilization can according to the invention be a utilization rate *u* defined as a ratio of number of bits used in a HARQ buffer over a total number of bits in the HARQ buffer.

A variable compression rate means that it should have at least two different compression rates, e.g. zero rate and a first compression rate *c*₁. The compression rate can more or less be a continuous function of the utilization rate *u* or a discrete function of the same, depending on the application.

If the compression rate is a discrete function of the utilization of the HARQ buffer one or more HARQ buffer utilization threshold values are used as input values to the discrete function so that the compression increases for increasing values of the threshold values. In this way overflow can be guaranteed to never occur, but such a solution will add headroom, i.e. compression will in some cases be applied when not needed.

The inventor has further realised that mentioned threshold values could be hysteresis threshold values. The compression rate should increase for increasing hysteresis threshold values and decrease for decreasing hysteresis threshold values. The use of hysteresis threshold values prevents rapid switching of compression rate, and thereby rapid change of link performance, which potentially affects link performance adaptation algorithms such as power control.

Furthermore, the present method further comprises the steps of decompressing stored soft values and thereafter compressing with a new compression rate if the HARQ buffer is full or near full. This eliminates the need for the above mentioned headroom in the HARQ buffer, i.e. reduces the size of the HARQ memory. This however requires additional computational power.

An alternative additional step to the present method is the step of recompressing with a new compression rate if the HARQ buffer is full or near full. The recompression is in this case achieved with truncation of stored soft values by overwriting. In this case the transport blocks are stored in a way that does not require re-compression, but overwriting of the least significant bit(s) is possible. This eliminates the need for the above mentioned headroom in the HARQ buffer, i.e. reduces the size of the HARQ memory, without additional computational power.

In both cases above it is required that the new compression rate is higher than the previous compression rate, i.e. the number of bits used for the already stored soft values is reduced in order to free up memory for the new soft values.

Another important consideration regarding compression of soft values is the allocation of HARQ processes in the HARQ buffer. The allocation can be dynamic or static. With static allocation, the memory is statically allocated for the HARQ processes at configuration time and not changed as long as the configuration is valid. The memory allocation is only changed at configuration or reconfiguration of e.g. number of HARQ processes, number of soft values per HARQ process, and is not dependent on changes in number of retransmissions as a result of e.g. environment changes like interference noise level. With dynamic allocation, the allocation of memory for a transport block is done when storing the soft values of the transport block in the HARQ buffer, and dependent on the current utilization of the HARQ buffer.

In the following disclosure different exemplary implementations and examples of the present invention are discussed. To further clarify the invention, examples of prior art methods are also described and shown in cases 1 and 2. Case 1 to 8 assumes a receiver supporting a maximum configuration with max 6 HARQ processes with maximum 43200 soft values per process, resulting in maximum of 6 x 43200 = 259200 soft values. The soft values are represented by 6 bits, or 4 bits as compressed. Prior art is shown in cases 1 and 2, with and without compression, respectively. A fixed allocation is used per HARQ process, and a fixed compression from 6 to 4 bits is used in the latter case.

The following cases 3 to 6 show the HARQ buffer allocation in static cases. In case 3, adaptive HARQ compression allocates the same amount of memory as prior art with compression to 4 bits, see case 3. In the extreme case where all transport blocks are retransmitted and at least one complete version of every transport block is present in HARQ buffer, all soft values are compressed to 4 bits (HARQ buffer as in case 2) and the performance equals prior art. Cases 4, 5 and 6 show adaptive HARQ compression with static allocation per configuration, which is configured with either limited number of HARQ processes or limited number of soft values per HARQ process.

With adaptive HARQ compression with dynamic allocation of memory, the compression of soft values is dependent on the current utilization of the total memory (note: if the total number of soft values is max 172800 no compression is applied.). In the following examples, 6 HARQ processes with 43200 soft values is assumed. In normal use cases, where not all transport blocks are stored in memory, i.e. less than 100 % error rate after first transmission, compression is only applied when needed. As long as max 67 % of the soft values have to be stored in HARQ buffer, see case 7 i.e. approx max 67 % of the transport blocks are requested for retransmission, no compression is needed. If more soft values have to be stored, compression is applied, e.g. when 83 % of the soft values have to be stored, 86400 soft values are stored without compression and 129600 are stored with compression, see case 8.

Using adaptive HARQ compression, the link performance will equal prior art without compression in cases when 67 % of the soft values have to be stored in HARQ buffer, and perform better than prior art when less than 100 % of the soft values have to be stored. For extreme cases when 100 % of the soft values have to be stored, the link performance will equal prior art with compression. The size of the HARQ buffer will in this example equal the prior art with compression. However, a trade-off between size of memory and link performance in extreme cases is possible.

Cases 9 to 11 illustrate different strategies for adaptation of compression rate. In all of those cases the following configuration is used: 6 bit soft values which can be compressed to 4 bits; the HARQ memory is 48 bits, i.e. 8 x 6 bit soft values, or 12 x 4 bit soft values, or a mixture (6 x 6 + 3x4, 4x6 + 6x4, 2x6 + 9 x 4) can be stored.

### Case 1 (illustrated in fig. 1)

Prior art, fixed allocation without compression: HARQ buffer with 6 HARQ processes and 43200 soft values per each process, without compression, in total 6 x 43200 x 6 bits = 1555200 bits.

### Case 2 (illustrated in fig. 2)

Prior art, fixed allocation with fixed compression to 4 bits: HARQ buffer with 6 HARQ processes and 43200 soft values per each process, with compression, in total 6 x 43200 x 4 bits = 1036800 bits.

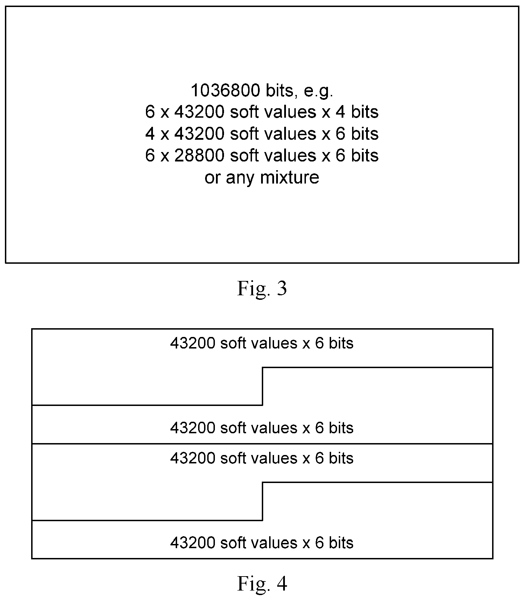

### Case 3 (illustrated in fig. 3)

Adaptive HARQ compression using flexible allocation with adaptive compression. The configuration determines the compression rate.

### Case 4 (illustrated in fig. 4)

Adaptive HARQ compression. Use case: 4 HARQ processes with 43200 soft values per process. No compression is needed, 6 bits per soft value is used. Since no compression is used, the link performance will be equal to prior art without compression.

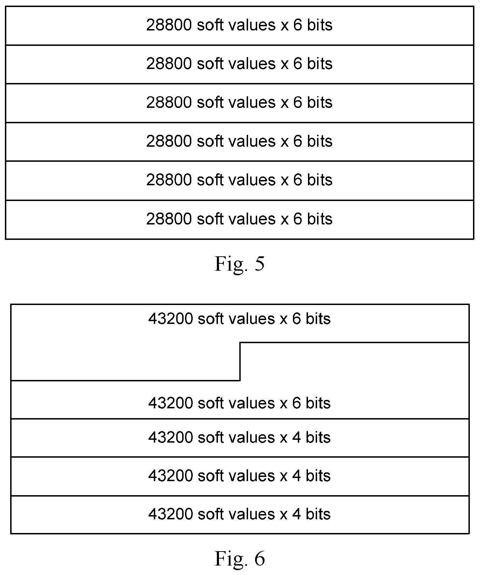

### Case 5 (illustrated in fig. 5)

Adaptive HARQ compression. Use case: 6 HARQ processes with 28800 soft values per process. No compression is needed, 6 bits per soft value is used. Since no compression is used, the link performance will be equal to prior art without compression.

### Case 6 (illustrated in fig. 6)

Adaptive HARQ compression. Use case: 5 HARQ processes with 43200 soft values per process. Compression is needed for 3 out of the 5 processes. Since no compression is used for soft values of the two of the processes, the link performance will be better than prior art with fixed compression (compression of all soft values).

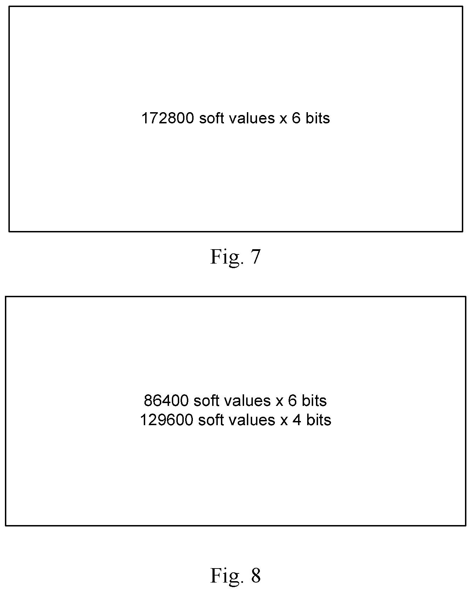

### Case 7 (illustrated in fig. 7)

Adaptive HARQ compression with dynamic allocation. As long as less than 172800 soft values are stored in memory, no compression is applied and link performance will equal prior art without compression.

### Case 8 (illustrated in fig. 8)

Adaptive HARQ compression with dynamic allocation; 216000 soft values are stored in memory, which requires that 129600 soft values are compressed. No compression is applied for 86400 soft values which results in better performance then prior art with compression.

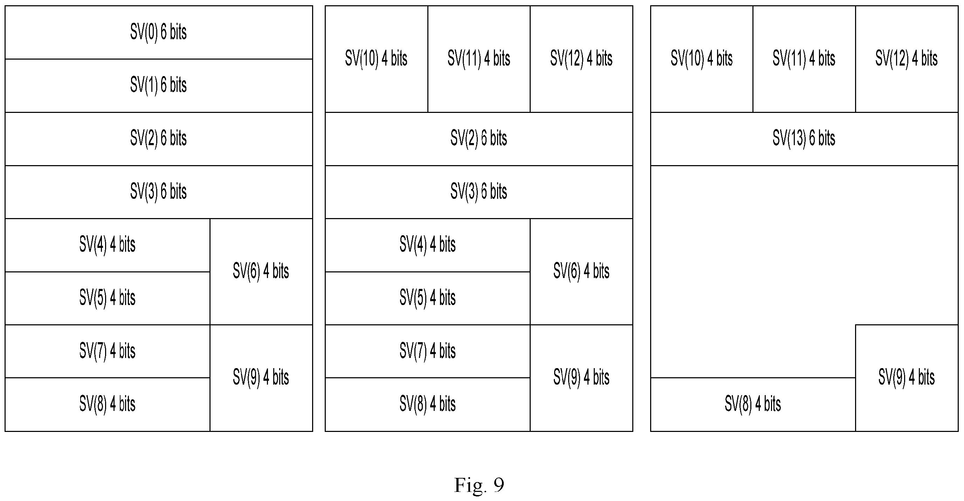

### Case 9 (illustrated in fig. 9)

Case 9 describes the adaptation of compression rate using HARQ memory utilization threshold(s). One threshold is used and set to 50 %, i.e. soft values are stored as 6 bit soft values while memory utilization is less than 50 %. When memory is filled to 50 %, i.e. 4 x 6 bit soft values are stored, soft values to be stored are compressed to 4 bits.
1. In the leftmost drawing, compression is applied for SV(4) and the following soft values, and the memory is filled with 10 SV, 4 x 6 bits + 6 x 4 bits = 48 bits.
2. In the next step, see the drawing in middle, SV(0) and SV(1) are read out, and SV(10) to SV(12) are stored as compressed soft values since the memory fill level exceeds 50 %.
3. In the last shown step, see right-most drawing, SV(2) to SV(7) are read out, and SV(13) is stored as 6 bits soft value since the memory fill level is below 50 %.

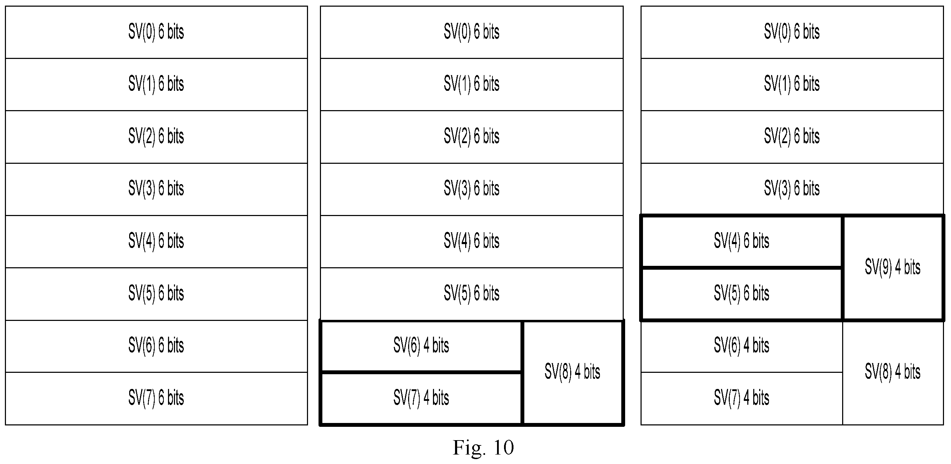

### Case 10 (illustrated in fig. 10)

Case 10 describes the steps of decompressing stored soft values and thereafter compressing with a new compression rate.
1. In the leftmost drawing, no compression is applied until memory is full, i.e. 8 x 6 bit soft values are stored.
2. When storing the SV(8), SV(6) and SV(7) are read out, compressed to 4 bits and stored in order to make the needed bits for SV(8) available, see the drawing in middle.
3. Mutandis mutatis for SV(9), SV(4) and SV(5) are read out, compressed to 4 bits and stored, see rightmost drawing.

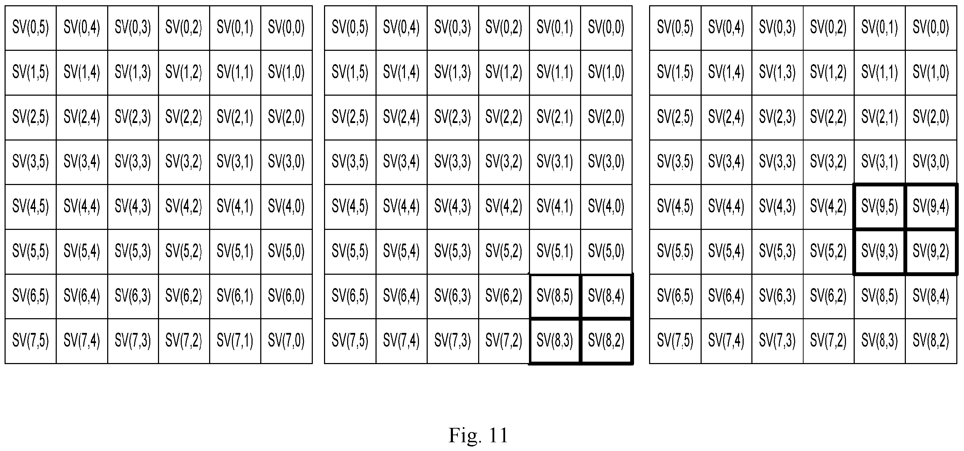

### Case 11 (illustrated in fig. 11)

Case 11 describes the steps of truncation of stored soft values by overwriting. Definition: SV(x,z) = Soft value x, bit z. The compression method is truncation of least significant bits, LSBs, i.e. SV(x,0) and SV(x,1) are truncated.
1. No compression is applied until memory is full, i.e. 8 x 6 bit soft values are stored, see the leftmost drawing.
2. When storing the SV(8) compression to 4 bits is applied, and SV(6,0 to 1) and SV(7,0 to 1) are overwritten, i.e. SV(6) and SV(7) are truncated/compressed, see the middle drawing.
3. Mutandis mutatis for SV(9), SV(4) and SV(5) are overwritten/truncated/compressed, see rightmost drawing.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

As mentioned above, the present invention also relates to a receiver device having the necessary means such as memory means, processing means, receiving means, etc. The device is preferably comprised in or being part of base station or a base station controller or a mobile station. The wireless communication system can of any suitable kind such as all 3GPP systems using HARQ processes such as EGPRS, UMTS, LTE, LTE Advanced, CDMA 2000.

## Claims

1. Method in a receiver for compressing soft values; said receiver comprising at least one HARQ buffer for storing bit representations of soft values used for HARQ retransmission combining in a wireless communication system; said method comprising the step of:
adaptively compressing soft values by using a variable compression rate c; wherein
said variable compression rate c is dependent on configured number of HARQ processes for said receiver and number of soft values for each HARQ process;
wherein the allocation of the HARQ processes in the HARQ buffer is static, and the allocation is changed at configuration or reconfiguration of the configured number of HARQ processes and the number of soft values for each HARQ process.

2. Method according to claim 1, wherein said variable compression rate c is dependent on a utilization of said HARQ buffer.

3. Method according to claim 2, wherein said variable compression rate c increases if said utilization increases.

4. Method according to claim 2 or 3, wherein said variable compression rate c decreases if said utilization decreases.

5. Method according to claim 2, wherein said HARQ buffer utilization is a utilization rate *u* defined as a ratio of number of bits used in said HARQ buffer over a total number of bits in said at least one HARQ buffer.

6. Method according to claim 2, wherein said variable compression rate c is a discrete function of said HARQ buffer utilization.

7. Method according to claim 6, wherein said variable compression rate c is a discrete function of one or more HARQ buffer utilization threshold values so that said variable compression rate c increases for increasing values of said at least one HARQ buffer utilization threshold values.

8. Method according to 7, wherein said one or more HARQ buffer utilization threshold values are hysteresis threshold values so that said variable compression rate c increases for increasing values of said hysteresis threshold values, and said variable compression rate *c* decreases for decreasing values of said hysteresis threshold values.

9. Method according to claim 1 or claim 7, further comprising the steps of:
- decompressing stored soft values and thereafter compressing with a new compression rate if said at least one HARQ buffer is full or near full.

10. Method according to claim 1 or claim 7, further comprising the step of:
- recompressing with a new compression rate if said at least one HARQ buffer is full or near full, wherein said recompression is achieved with truncation by overwriting.

11. Method according to claim 9 or 10, wherein said new compression rate is higher than a previous compression rate.

12. Method according to claim 1, wherein said wireless communication system employs multiple HARQ processes, and wherein said multiple HARQ processes are dynamically allocated in said at least one HARQ buffer.

13. Method according to claim 1, wherein said wireless communication system is a 3GPP system, and preferably EGPRS, UMTS, LTE, LTE Advanced, CDMA 2000; and wherein said receiver is comprised in a base station such as a NodeB, eNodeB, a relay node, a mobile station such as a user equipment.

14. A computer program comprising instructions which, when the program is executed by processing means causes said processing means to execute said method according to any of claims 1-13.

15. Computer program product comprising a computer readable medium and a computer program according to claim 14, wherein said computer program is included in the computer readable medium, and comprises of one or more from the group: Read-Only-Memory, ROM, Programmable ROM, PROM, Erasable PROM, EPROM, Flash memory, Electrically EPROM, EEPROM, and hard disk drive.

16. Receiver device comprising at least one HARQ buffer for storing bit representations of soft values used for HARQ retransmission combining in a wireless communication system; arranged to adaptively compress soft values by using a variable compression rate c;
wherein said variable compression rate c is dependent on configured number of HARQ processes for said receiver and number of soft values for each HARQ process; wherein the allocation of the HARQ processes in the HARQ buffer is static, and the allocation is changed at configuration or reconfiguration of the configured number of HARQ processes and the number of soft values for each HARQ process.

## Patentansprüche

1. Verfahren in einem Empfänger zum Komprimieren weicher Werte; wobei der Empfänger mindestens einen HARQ-Puffer zum Speichern von Bit-Darstellungen von weichen Werten, die zur HARQ-Rückübertragung verwendet werden, und Kombinieren in einem drahtlosen Kommunikationssystem umfasst; wobei das Verfahren den folgenden Schritt umfasst:
adaptives Komprimieren weicher Werte durch Verwendung einer variablen Kompressionsrate c;
wobei die variable Kompressionsrate c von der konfigurierten Anzahl von HARQ-Prozessen für den Empfänger und der Anzahl von weichen Werten für jeden HARQ-Prozess abhängig ist;
wobei die Zuordnung der HARQ-Prozesse in dem HARQ-Puffer statisch ist und die Zuordnung bei Konfiguration oder Rekonfiguration der konfigurierten Anzahl von HARQ-Prozessen und der Anzahl von weichen Werten für jeden HARQ-Prozess geändert ist.

2. Verfahren nach Anspruch 1, wobei die variable Kompressionsrate c von einer Nutzung des HARQ-Puffers abhängig ist.

3. Verfahren nach Anspruch 2, wobei die variable Kompressionsrate c ansteigt, wenn die Nutzung ansteigt.

4. Verfahren nach Anspruch 2 oder 3, wobei die variable Kompressionsrate c abnimmt, wenn die Nutzung abnimmt.

5. Verfahren nach Anspruch 2, wobei die Nutzung des HARQ-Puffers eine Nutzungsrate *u* ist, die als Verhältnis der BitAnzahl, die in dem HARQ-Puffer verwendet wird, über einer Gesamtanzahl von Bits in dem mindestens einen HARQ-Puffer definiert ist.

6. Verfahren nach Anspruch 2, wobei die variable Kompressionsrate *c* eine diskrete Funktion der Nutzung des HARQ-Puffers ist.

7. Verfahren nach Anspruch 6, wobei die variable Kompressionsrate *c* eine diskrete Funktion von Schwellenwerten der Nutzung eines oder mehrerer HARQ-Puffer ist, sodass die variable Kompressionsrate *c* für ansteigende Werte von Schwellenwerten der Nutzung mindestens eines HARQ-Puffers ansteigt.

8. Verfahren nach 7, wobei die Schwellenwerte der Nutzung des einen oder mehrerer HARQ-Puffer Schwellenwerte für die Hysterese sind, sodass die variable Kompressionsrate *c* für ansteigende Werte der Schwellenwerte für die Hysterese ansteigt und die variable Kompressionsrate *c* für abnehmende Werte der Schwellenwerte für die Hysterese abnimmt.

9. Verfahren nach Anspruch 1 oder Anspruch 7, das ferner die folgenden Schritte umfasst:
- Dekomprimieren gespeicherter weicher Werte und anschließend Komprimieren mit einer neuen Kompressionsrate, wenn der mindestens eine HARQ-Puffer voll oder fast voll ist.

10. Verfahren nach Anspruch 1 oder Anspruch 7, das ferner den folgenden Schritt umfasst:
- Rekomprimieren mit einer neuen Kompressionsrate, wenn der mindestens eine HARQ-Puffer voll oder fast voll ist, wobei die Rekompression mit Trunkierung durch Überschreiben erreicht wird.

11. Verfahren nach Anspruch 9 oder 10, wobei die neue Kompressionsrate höher als die vorherige Kompressionsrate ist.

12. Verfahren nach Anspruch 1, wobei das drahtlose Kommunikationssystem mehrere HARQ-Prozesse anwendet, und wobei die mehreren HARQ-Prozesse in dem mindestens einen HARQ-Puffer dynamisch zugeordnet sind.

13. Verfahren nach Anspruch 1, wobei das drahtlose Kommunikationssystem ein 3GPP-System und bevorzugt EGPRS, UMTS, LTE, LTE-Advanced, CDMA 2000 ist; und wobei der Empfänger in einer Basisstation, wie etwa einem NodeB, eNodeB, einem Relaisknoten, einer Mobilstation wie etwa einem Benutzergerät, enthalten ist.

14. Computerprogramm, das Anweisungen umfasst, welche bei Ausführung des Programms durch ein Verarbeitungsmittel herbeiführen, dass das Verarbeitungsmittel das Verfahren nach einem der Ansprüche 1-13 ausführt.

15. Computerprogrammprodukt, das ein computerlesbares Medium und ein Computerprogramm nach Anspruch 14 umfasst, wobei das Computerprogramm in dem computerlesbaren Medium enthalten ist und eines oder mehrere aus der folgenden Gruppe umfasst: Festwertspeicher (ROM), programmierbarer ROM (PROM), löschbarer PROM (EPROM), Flash-Speicher, elektrischer EPROM (EEPROM) und Festplattenlaufwerk.

16. Empfängervorrichtung, die mindestens einen HARQ-Puffer zum Speichern von Bit-Darstellungen von weichen Werten, die zur HARQ-Rückübertragung verwendet werden, und Kombinieren in einem drahtlosen Kommunikationssystem umfasst;
angeordnet zum adaptiven Komprimieren weicher Werte durch Verwendung einer variablen Kompressionsrate *c;*
wobei die variable Kompressionsrate *c* von der konfigurierten Anzahl von HARQ-Prozessen für den Empfänger und die Anzahl von weichen Werten für jeden HARQ-Prozess abhängig ist;
wobei die Zuordnung der HARQ-Prozesse in dem HARQ-Puffer statisch ist und die Zuordnung bei Konfiguration oder Rekonfiguration der konfigurierten Anzahl von HARQ-Prozessen und der Anzahl von weichen Werten für jeden HARQ-Prozess geändert ist.

## Revendications

1. Procédé dans un récepteur de compression de valeurs logicielles ; ledit récepteur comprenant au moins un tampon HARQ pour stocker des représentations binaires de valeurs logicielles utilisées pour la combinaison de retransmission HARQ dans un système de communication sans fil ; ledit procédé comprenant l'étape de : compression adaptative de valeurs logicielles à l'aide d'un taux de compression variable c ;
dans lequel
ledit taux de compression variable c dépend du nombre configuré de processus HARQ pour ledit récepteur et du nombre de valeurs logicielles pour chaque processus HARQ ;
dans lequel l'attribution des processus HARQ dans le tampon HARQ est statique, et l'attribution est modifiée lors de la configuration ou de la reconfiguration du nombre configuré de processus HARQ et du nombre de valeurs logicielles pour chaque processus HARQ.

2. Procédé selon la revendication 1, dans lequel ledit taux de compression variable c dépend d'une utilisation dudit tampon HARQ.

3. Procédé selon la revendication 2, dans lequel ledit taux de compression variable *c* augmente si ladite utilisation augmente.

4. Procédé selon la revendication 2 ou 3, dans lequel ledit taux de compression variable c diminue si ladite utilisation diminue.

5. Procédé selon la revendication 2, dans lequel ladite utilisation de tampon HARQ est un taux d'utilisation u défini comme un rapport du nombre de bits utilisés dans ledit tampon HARQ sur un nombre total de bits dans ledit au moins un tampon HARQ.

6. Procédé selon la revendication 2, dans lequel ledit taux de compression variable c est une fonction discrète de ladite utilisation de tampon HARQ.

7. Procédé selon la revendication 6, dans lequel ledit taux de compression variable c est une fonction discrète d'une ou de plusieurs valeurs seuil d'utilisation de tampon HARQ de sorte que ledit taux de compression variable *c* augmente pour des valeurs croissantes desdites au moins une valeurs seuil d'utilisation de tampon HARQ.

8. Procédé selon 7, dans lequel lesdites une ou plusieurs valeurs seuil d'utilisation de tampon HARQ sont des valeurs seuil d'hystérésis de sorte que ledit taux de compression variable *c* augmente pour des valeurs croissantes desdites valeurs seuil d'hystérésis, et ledit taux de compression variable *c* diminue pour des valeurs décroissantes desdites valeurs seuil d'hystérésis.

9. Procédé selon la revendication 1 ou la revendication 7, comprenant en outre les étapes de :
- décompression de valeurs logicielles stockées et ensuite de compression avec un nouveau taux de compression si ledit au moins un tampon HARQ est plein ou presque plein.

10. Procédé selon la revendication 1 ou la revendication 7, comprenant en outre l'étape de :
- recompression avec un nouveau taux de compression si ledit au moins un tampon HARQ est plein ou presque plein, dans lequel ladite recompression est réalisée avec troncature par écrasement.

11. Procédé selon la revendication 9 ou 10, dans lequel ledit nouveau taux de compression est supérieur à un taux de compression précédent.

12. Procédé selon la revendication 1, dans lequel ledit système de communication sans fil utilise plusieurs processus HARQ, et dans lequel lesdits plusieurs processus HARQ sont attribués dynamiquement dans ledit au moins un tampon HARQ.

13. Procédé selon la revendication 1, dans lequel ledit système de communication sans fil est un système 3GPP, et de préférence EGPRS, UMTS, LTE, LTE Advanced, CDMA 2000 ; et dans lequel ledit récepteur est compris dans une station de base telle qu'un nœud B, un nœud B évolué, un nœud relais, une station mobile telle qu'un équipement utilisateur.

14. Programme informatique comprenant des instructions qui, lorsque le programme est exécuté par un moyen de traitement, amène ledit moyen de traitement à exécuter ledit procédé selon l'une quelconque des revendications 1 à 13.

15. Produit de programme informatique comprenant un support lisible par ordinateur et un programme informatique selon la revendication 14, dans lequel ledit programme informatique est inclus dans le support lisible par ordinateur, et comprend un ou plusieurs éléments du groupe : mémoire morte, ROM, ROM programmable, PROM, PROM effaçable, EPROM, mémoire flash, EPROM électriquement, EEPROM et lecteur de disque dur.

16. Dispositif récepteur comprenant au moins un tampon HARQ pour stocker des représentations binaires de valeurs logicielles utilisées pour la combinaison de retransmission HARQ dans un système de communication sans fil ; agencé pour compresser de manière adaptative des valeurs logicielles à l'aide d'un taux de compression variable c ;
dans lequel
ledit taux de compression variable c dépend du nombre configuré de processus HARQ pour ledit récepteur et du nombre de valeurs logicielles pour chaque processus HARQ ;
dans lequel l'attribution des processus HARQ dans le tampon HARQ est statique, et l'attribution est modifiée lors de la configuration ou de la reconfiguration du nombre configuré de processus HARQ et du nombre de valeurs logicielles pour chaque processus HARQ.
